(19) Europäisches Patentamt
European Patent Office
Office européen des brevets

(11) EP 1 824 794 B1

(12) **EUROPEAN PATENT SPECIFICATION**

(45) Date of publication and mention
of the grant of the patent:
**03.02.2016 Bulletin 2016/05**

(51) Int Cl.:
*C03B 32/00* (2006.01)    *G02B 6/10* (2006.01)
*G02B 6/122* (2006.01)   *G02B 6/13* (2006.01)

(21) Application number: **05808281.9**

(22) Date of filing: **17.11.2005**

(86) International application number:
**PCT/IL2005/001223**

(87) International publication number:
**WO 2006/054302 (26.05.2006 Gazette 2006/21)**

(54) **METHODS AND PROCESS OF TAPERING WAVEGUIDES AND OF FORMING OPTIMIZED WAVEGUIDE STRUCTURES**

VERFAHREN UND VORRICHTUNG FÜR SICH VERJÜNGENDE WELLENLEITER UND ZUR AUSBILDUNG VON OPTIMIERTEN WELLENLEITERSTRUKTUREN

PROCEDES ET PROCESSUS POUR DIMINUER DES GUIDES D'ONDES ET POUR FORMER DES STRUCTURES DE GUIDE D'ONDES OPTIMISEES

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.11.2004 US 628138 P**

(43) Date of publication of application:
**29.08.2007 Bulletin 2007/35**

(73) Proprietor: **Color Chip (Israel) Ltd.**
**38900 Caesarea (IL)**

(72) Inventors:
• **MALINOVICH, Yacov**
**36021 Tivon (IL)**
• **ARAD, Eli**
**63455 Tel Aviv (IL)**
• **SHEMI, Amotz**
**46348 Herzliya (IL)**
• **PORAT, Eyal**
**23800 Givat-Ella (IL)**

• **GRIMBERG, Rodi**
**44214 Kfar Saba (IL)**

(74) Representative: **Vaughan, Christopher Tammo et al**
**HGF Limited**
**Belgrave Hall**
**Belgrave Street**
**Leeds LS2 8DD (GB)**

(56) References cited:
JP-A- 58 118 610    JP-A- 60 145 935
SU-A1- 1 365 630    US-A- 3 836 348
US-A- 4 711 514

• LIPOVSKII ET AL: "A taper coupler for integrated optics formed by ion-exchange under a non-uniform electric field" OPTICS COMMUNICATIONS, NORTH-HOLLAND PUBLISHING CO. AMSTERDAM, NL, vol. 61, no. 1, 1 January 1987 (1987-01-01), pages 11-15, XP024467471 ISSN: 0030-4018 [retrieved on 1987-01-01]

EP 1 824 794 B1

## Description

## BACKGROUND OF THE INVENTION

Recently, as wavelength division multiplexing (WDM) optical communication systems are employed, demand for optical devices used in the WDM optical communication systems has been significantly increased. Optical fiber is usually used as a transfer path of optical signals on optical communications. However, there is a technical limit in manufacturing the fiber device having multi-channel such as a multi-channel optical coupler and WDM device. Therefore, a planar light waveguide circuit (PLC), where optical waveguides and many unit optical devices are integrated, is used in WDM devices.

Optical communication systems are configured to propagate signals between various locations. Through at least a portion of such a communication system, the signals are provided as light that is propagated along an optical path. At various locations along an optical path of a communication system, it may be desirable to reshape or scale the mode of light propagating along the optical path. For instance, mode typically is reshaped to satisfy mode-match requirements of optical components positioned along an optical path. For example, mode may be reshaped to accommodate a transition from an optical fiber to an integrated optic component. As used herein, the term "mode" refers to the spatial distribution of light relative to a cross-sectional area oriented normal to the optical path. To couple efficiently, the waveguide used for coupling should be relatively lossless and remain a single mode waveguide despite the change in its channel width between the two dimensions. The latter consideration requires that the index of refraction along the channel vary inversely with the change in its geometry. These factors pose problems.

In particular, if the desired change in channel width is achieved simply by forming, by the normal photolithographic techniques, a channel whose width tapers gradually between the two dimensions needed, the index of refraction of the channel guide tends to remain uniform along the length of the tapered region because the concentration of the impurity added to form the index of refraction change in the channel tends to be uniform along such length. As a consequence, because the width of the channel varies along such length while the index of refraction remains uniform along the length, the modal properties along the region of taper vary. What is needed to maintain the modal properties essentially constant along the length where the channel width varies is a compensating change in the index of refraction along such length.

The problem is especially critical with waveguides that use a large index of refraction change between the channel and its substrate to achieve tight confinement of energy in the channel. The large index change results in a large modal mismatch between the relatively narrow single mode channel waveguides useful in integrated circuit devices and the typically wider optical fibers that are often coupled to such channel waveguides.

Transformation of modal properties through axial tapering of a waveguide is useful in several contexts. For example, mode-size transformation permits independent optimization of the mode size in different portions of the waveguide for effective input and output coupling. Mode-size transformation also can be used to obtain a narrow far-field of the out coupled modes. An adiabatic taper from a single-mode to a multi-mode waveguide also permits robust coupling into the fundamental mode of a multi-mode waveguide. This is important in certain types of nonlinear waveguide devices that involve interactions between modes at widely separated wavelengths.

A prior art solution for mode matching uses an optical fiber and a micro-lens, e.g., a spherical lens or gradient index lens. The optical fiber and micro-lens allow for collection of light from the output component, e.g., an output fiber. The optical fiber and micro-lens also provide input coupling of light into the input component, e.g., an input fiber. Typical disadvantages of using such a solution include design difficulties in providing components that are configured to receive the input mode and provide an appropriately reshaped output mode.

Tapered optical fibers also have been used to reshape mode. A tapered optical fiber includes one or more tapered portions, i.e., portions that have cross-sectional areas that vary along their respective lengths. The tapered portions of these fibers typically are formed by controlled incremental heating. For instance, by heating a portion of a fiber, the fiber core tends to expand, thus resulting in a localized increase in cross-sectional area of the fiber. Simultaneous heating and pulling of the fiber results in a reduction of cladding and core dimensions. A potential disadvantage of using tapered optical fibers includes decreased mechanical strength of the fiber.

Additionally, integrated optic waveguides with continuous tapers and segmented tapers have been used for reshaping mode. As used herein, the term "segmented taper" refers to a waveguide taper that is composed of or divided into portions with different optical properties that are defined by dielectric boundaries. These dielectric boundaries are formed between the waveguide portions and portions of the substrate material, as viewed along the axis of light propagation. The term "continuous taper" refers to a waveguide taper in which light, upon its propagation, does not traverse dielectric boundaries between the waveguide portions and portions of the substrate material. Thus, in a waveguide with continuous taper, the taper changes its optical properties in a continuous and adiabatic fashion. Waveguides with segmented tapers are capable of providing two-dimensional mode tapering. However, these waveguides typically are with high losses due to the multiple dielectric boundaries formed between the segmented waveguide portions. In addition, precise control of segmentation is technologically involved. Therefore, it can be appreciated that there is a need for systems and methods that address these and/or other shortcomings of the prior art.

The planar type optical devices can be made of various materials such as glass, semiconductors, amorphous silica and polymer. Ion Exchange (IE) and other ion diffusion techniques have been receiving increased attention as methods to produce channel optical waveguides in glass and other materials. The importance of the resulting channel glass waveguides stems from their compatibility with optical fibers, potentially low cost, low propagation losses and other factors. An example for the method of manufacturing the planar waveguide using the IE (Ion Exchange) method includes U.S. Pat. No. 4,913,717 (Apr. 3, 1990) entitled "Method for Fabricating Buried Waveguides, U.S. Pat. No. 5,035,734 (Jul. 31, 1991) entitled "Method of Producing Optical Waveguides", U.S. Pat. No. 5,160,360 (Nov. 3, 1992) entitled "Process for Producing Low-loss Embedded Waveguide", Strip Waveguides with Matched Refractive Index Profiles Fabricated by Ion Exchange in Glass (pp.1966.about.1974 of 'J. Appl. Phys', 1991 by T. Poszner, G. Schreiter, R. Muller), Field-Assisted Ion Exchange in Glass: the Effect of Masking Film (pp.1212.about.1214 of 'Appl. Phys. Lett', 1993 by B. Pantchev, P. Danesh, Z. Nilcolov), and Polarization Insensitive Ion-Exchanged Arrayed-Waveguide Grating Multiplexers in Glass (pp. 279.about.298 of 'Fiber and integrated optics', 1998 by B. Buchold, C. Glingener, D. Culemann, E. Voges). A review of the *Ion Exchange* techniques is given by Ramaswamy et al., J. of Lightwave Technology, Vol. 6, No. 6, p.p. 984-1002, June 1998.

The method of manufacturing the planar waveguide using the Ion Exchange method, which was proposed by the patents and papers, can be summarized as follows:

> The process is based on local changes in refractive index, which is achieved by replacing network modifiers from the glass with other ions at low temperature (below the strain point of the glass substrate). The exchanged ion in most cases is Sodium. The indiffused ion may be another alkali metal (Lithium, Potassium, Rubidium, and Cesium) or another monovalent or divalent ion: Silver, Thallium or Copper. The most commonly used ions are Potassium and Silver. In the case of Potassium for Sodium IE the index change is induced mainly by stresses arising from the big differences in ionic radii, while in the case of Silver for Sodium IE the index change is due to the high polarizability of the Ag+ ion.

The source of the exchanging ions can be molten salt or a metallic layer deposited on the glass surface. The exchange can be performed either by thermal diffusion or by electro- migration. In order to achieve a high Δn upon IE, Silver for Sodium and Thallium for Sodium are preferable over alkali metal change. Another advantage of Silver IE is that stress free and hence Birefringence free products can be produced.

The Ion Exchange is occurred between a specific ion within the substrate glass (dominantly Na+ ions) and that within a salt solution containing specific ions (such as K+, Ag+, Cs+, Li+, Rb+, and T1+ ions) when the glass surface between metal thin films called as a mask contacts with the salt solution. Based on this principle, a waveguide having high refractive indices is formed at predetermined portion of the substrate glass.

A typical diffusion process is exemplified by an Ion Exchange process wherein a piece of glass or another suitable material (a wafer) is contacted (e.g. immersed) with a melt containing desired ions. The ions of the melt, e.g. Ti+, Cs+, K+, Li+, Ag+, Rb+ ions, chosen to have a higher polarizability than the ones of the wafer, are exchanged with ions from the wafer, typically Na+. A review of the Ion Exchange techniques is given by Ramaswamy et al., J. of Lightwave Technology, Vol. 6, No. 6, p.p. 984-1002, June 1998. Generally, the techniques include depositing a metallic mask, with slots made e.g. by photolithography, on the glass substrate, contacting the substrate with melt containing selected cations, and, once surface waveguide(s) is produced by Ion Exchange and diffusion, optionally an application of electromagnetic field to force the cations below the surface to produce "buried" waveguides.

The refractive index is locally increased in the substrate because of three factors: local change of the *glass* density, higher polarizability of the locally exchanged ions, and local stresses.

In more details, a surface of a glass substrate or another suitable material (a wafer) is initially masked by depositing a layer of masking material on a surface of the substrate, and photolithographic process of etching the layer of masking material, leaving openings where the waveguide path is to be formed. The masked surface is contacted by a first molten salt bath. In most cases, sodium ions in the substrate glass are exchanged for a doping cation such as Cs, Ag, Ru or Tl. An electrical field is sometimes applied during this first Ion Exchange process.

An alternative first Ion Exchange process: a surface of a glass substrate or another suitable material (a wafer) is initially masked by depositing a layer of pure metal or material that includes the donor (Silver) ions on a surface of the substrate, and photolithographic process of etching the layer of the suitable material, leaving it only where the waveguide path is to be formed. Ion Exchange process in which original (Sodium) ions in the glass are exchanged with donor (Silver) ions in the coating at high temperature by a diffusion process is following and electrical field is sometimes applied during this first Ion Exchange process.

The result of this first Ion Exchange process is usually a waveguide in the glass adjacent to the surface with relatively high Δn, relatively uniform Δn, relatively low thickness, and width according to the mask design.

The waveguide path can be buried under the substrate surface by removing the mask, applying external electric field across the substrate in an oven and contacting the active side with a second molten salt bath which contains ions that contribute less to the substrate refractive index, e.g. Na and K ions. Two effects contribute to this second Ion Exchange process - the burying process:

> 1. The electric field generates ionic current (current means ions electro migration) and the waveguide drifts (migrate, dragged) to deeper depth.
> 2. The current generates heat in the glass and in combination with the oven heat, the donor (silver) ions diffusion rates, cause waveguides swelling.

As a result of this double Ion Exchange process, there is formed beneath the first substrate surface a signal carrying region that has a higher refractive index than the region surrounding it, buried waveguides in the substrate with relatively low Δn, relatively high diameter and circular shape according to the process design.

U.S. Pat. No. 4,886,538 (Dec. 12 1989) entitled "Process for tapering waveguides" relates to a process for forming a channel waveguide in which the channel geometry and the channel index of refraction vary oppositely along the channel length to keep the modal characteristic of the channel uniform uses non-uniform heating of a channel waveguide to cause non-uniform diffusion of the channel doping ions. In one embodiment, the channel is passed under a laser at a non-uniform rate to expose the channel to different numbers of laser pulses.

U.S. Pat. No. 6,751,391 (June 15, 2004) entitled " Optical systems incorporating waveguides and methods of manufacture" relates to an optical system that includes a substantially planar substrate and an elongate, two-dimensionally tapered waveguide channel at least partially buried in the substrate. It relates to a method for forming an optical system includes: providing a substrate; depositing on the substrate a contoured channel preform of material capable of Ion Exchange with the substrate; and diffusing ions from the channel preform into the substrate to form a waveguide channel at least partially buried in the substrate.

U.S. Pat. No. 6,769,274 (Aug. 3, 2004) entitled "Method of manufacturing a planar waveguide using Ion Exchange method" relates to a method of manufacturing the planar waveguide comprises three steps. The firs step is making a surface layer having a higher refractive index than that of glass substrate and a given thickness on a glass substrate by an Ion Exchange process; the second step is forming the pattern of the waveguide within the surface layer on the glass substrate; and the third step is coating a cladding layer on the entire surface including the waveguide. According to the process of the invention, a waveguide that is excellent in dimension control and reproducibility and has a sharp step wall can be produced.

United States patent number US 4,711,514 is directed to product of and process for forming tapered waveguides, and describes a method of forming a tapered optical waveguide within a substrate. An appropriate substrate is coated with a layer of barrier material such as silicon dioxide, which provides a relatively tight matrix relative to the open matrix of the substrate. The barrier material is deposited on the substrate with a sloping variable thickness that is inversely related to the desired depth of the waveguide taper. The barrier material can be deposited through a vacuum deposition technique and subsequently subjected to ion-milling to provide the desired taper. An appropriate source of metal ions, such as silver, capable of being transferred, such as by diffusion into the substrate for increasing the refractive index and thereby defining a waveguide, is then transmitted to and through the barrier material. The metal may be coated on the tapered barrier material, and then diffused into the substrate through the barrier material which provides a controlled transmission of the ions proportional to its thickness. The substrate can then be cleaned to strip both the barrier material and residual metal for subsequent processing.

United States patent number US 3,836,348 is directed to a method for manufacturing optical integrated circuits utilizing an external electric field. The method forms light guide paths in a substrate by an ionic exchange process. Ions initially present in the substrate are replaced by ions from a source thereof to locally increase the substrate index of refraction, thereby forming light guides, in a pattern dependent upon a mask disposed intermediate the substrate and the ion source. An electric field is externally applied in the direction of ionic migration, to provide light guide walls exhibiting abrupt variations in refractive index; and a light guide may be shifted into the interior of the substrate.

Japanese patent publication number JP A 58118610 is directed to production of tapered optical waveguide. Its system operates to reduce the time for production and to simplify production processes, by penetrating metallic ions into a transparent substrate having tapered thickness in the stripe shape extending in the direction where the thickness of the substrate changes, thereby forming a high refractive index part. A diffusion blocking layer for silver is provided by vacuum deposition of aluminum on one surface of a glass substrate of which the thickness changes in a tapered shape, and part thereof forms a stripe pattern. A thin film layer of silver and an anode electrode of aluminum are vacuum deposited thereon. A cathode electrode of aluminum is vacuum deposited on the other surface of the substrate. The substrate is heated and is subjected to electric field diffusion so that silver ions are diffused. The depth of diffusion is small when the substrate is thick, and large when the substrate is thin; and tapered high refractive index parts are formed in the substrate. The sectional shape thereof is roughly semicircular and forms tapered optical waveguides.

Japanese patent publication number JP A 60145935 is directed to manufacture of optical waveguide. Its system operates to manufacture an optical waveguide having a tapered depth, by changing the voltage applied across a glass substrate and a molten salt with a place of the glass substrate. An electrical resistant film is formed all over one side of a glass substrate having a mask pattern formed on the other side. Electrodes are formed separately on both ends of the resistant film. The mask pattern side of the substrate is then dipped in a molten salt. A first voltage is applied from a power source across the molten salt as the positive side and the electrode as the negative side. A second voltage is simultaneously applied from a power source across a first electrode as the positive side and a second electrode as the negative side, to permeate ions from the molten salt into the unmasked part of the substrate. A glass ion exchange is carried out to form a tapered high-refractive index part in the substrate.

The prior art methods and processes of tapering waveguides and of forming optimized waveguide structures are performed in a relatively complicated ways. Therefore, it can be appreciated that there is a need for methods and processes that address these and/or other shortcomings of the prior art.

## SUMMARY OF THE INVENTION

According to a first aspect, there is provided a method for shaping an optical waveguide within a substrate, as set forth in claim 1 of the appended claims.

According to a second aspect, there is provided a system for shaping an optical waveguide within a substrate, as set forth in claim 9 of the appended claims.

The present invention is directed to a method and process for forming a channel waveguide whose width and depth can be varied in any desired manner along its length, typically to taper in continuous fashion and adiabatic design from a relatively wide dimension to a relatively narrow dimension over a short length, and in which the index of refraction in the channel along such length varies in a manner to compensate for the change in geometry. As a result, the modal properties of the channel remain essentially uniform over the length.

In this process, the portion of the channel whose width and depth is to be controlled is subjected to non-uniform electric field along its length for a time and at a temperature such that there is effected along such length a prescribed non-uniform diffusion of the doping ions or impurity.

The electric field tends to diffuse the impurity outwards from the channel and increase its width and depth. Moreover, because the same amount of doping ions or impurity will merely have been spread over a wider waveguide volume, the increase in volume will have been compensated for by a corresponding decrease in the index of refraction.

Various ways are feasible for providing the desired non-uniform electric field. In a preferred embodiment, the local non-uniform electric field along the substrate length is maintained while the overall external electric field between the electrodes is fixed and constant along the substrate length.

Embodiments of the present invention may be used to improve the structure of an optical circuit and a waveguide optical amplifier.

Other systems, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims.

## BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

Fig. 1 is a schematic cross sectional description of electric field across substrate in an Ion Exchange process, according to some embodiments of the invention;

Fig. 2 is a schematic cross section of tapering device according to an embodiment of the present invention;

Fig. 3 is a schematic cross section description of tapering device along a longitudinal axis of waveguide, functioning according to some embodiments of the present invention;

Fig. 4 is a schematic cross section description of tapering device along a longitudinal axis of waveguide, functioning according to some embodiments of the present invention;

Figs. 5A-5C are schematic cross section descriptions of a tapering device along a longitudinal axis of waveguide, functioning according to some embodiments of the present invention; and

Fig. 6 is a schematic cross sectional description of a coupling waveguide fabricated according to some embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

**DETAILED DESCRIPTION OF THE INVENTION**

In the following detailed description, numerous specific details are set forth in order to provide a thorough understanding of the invention. However it will be understood by those of ordinary skill in the art that the present invention may be practiced without these specific details. In other instances, well-known methods, procedures, components and devices have not been described in detail so as not to obscure the present invention.

It should be understood that the present invention may be used in a variety of applications. Although the scope of the present invention is not limited in this respect, the device and method disclosed herein may be used in many apparatuses such as in the opto-electronic devices, LASER Diodes, opto-diodes, fiber-optic, etc. Matching devices between laser diodes and single mode fiber, matching devices between single and multi mode fibers, focusing of large optical spot to small optical spot and so..]. Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include device for performing the operation herein. This device may be specially constructed for the desired purposes, or it may be comprised a general-purpose apparatus or system.

In a uniform electric field (such as in, for example, an infinite, parallel plate capacitor):

$$E = V/d$$

Where E is the electric field strength, $V$ is the voltage and $d$ is the separation between the plates or electrodes.

In the case of Ion Exchange (IE) process the local internal electric field across the substrate is given by the same equation when d is the local substrate thickness and V is the voltage across the substrate between the two substrate interfaces with the conductive molten salt.

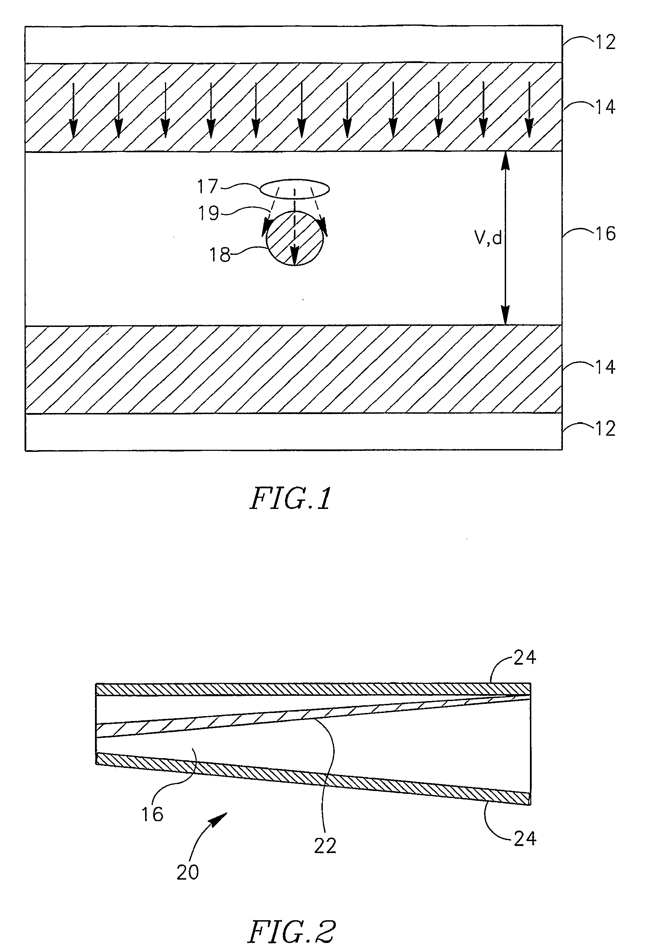

Reference is made now to Fig. 1, which is a schematic cross section description of internal electric field across substrate 16 in an Ion Exchange process, according to some embodiments of the invention. According to the depicted description by applying external electric field $E$ by means of applying voltage $V$ to electrodes 12 in touch with conductive material, such as molten salt 14, which are in touch with opposite faces of substrate 14, these faces in distance $d$ from each other. Due to resulting electrical field $E$ ions of substrate 16 are dragged inside the substrate 14 from position 17 to position 18 along arrows 19 and the waveguide initial core 17 is shaped from oval shape to circular 18 shape.

Based on the process described above, shape of a waveguide may be controlled to have desired shape or shapes along its longitudinal axis. Control of the magnitude of electrical field E may be achieved, according to some embodiments of the present invention, by defining the distance between the electrodes applying the electrical field to be non-constant as in Fig. 1.

Wedged Substrate

Reference is made now to Fig. 2, which is a schematic cross section of tapering device 20 along a longitudinal axis of waveguide 22, functioning according to an embodiment of the present invention. Initially, a core, initial waveguide may be formed in substrate 16 by burying a silver waveguide under linear gradient electric field Then, electrical field (not shown) may be applied to electrodes located on faces 24 of substrate 16 formed as a wedge so that the distance between faces 24 is linearly changing along substrate 16. Accordingly, the magnitude of the electrical field (aimed across substrate 16 from the upper electrode 24 to the lower electrode 24 in Fig. 2) changes linearly, being weaker close to the right side and stronger close to the left side of substrate 16 (Fig. 2). Due to the different magnitude of the electrical field along waveguide 16 the changes implied on the initial core shape (not shown) are weaker close to the right side of substrate 16 and stronger close to the left side of substrate 16, thus waveguide 22 may be tapered from left to right. Tapered waveguides are produced by burying the silver waveguides under linear gradient electric field. Under variable electric field conditions, two effects contribute to tapered waveguides:

1. High electric field generates higher ionic current followed by a deeper burial depth. (high current mean faster ion electro migration)

2. High current generates more heat in the glass, the silver ion diffusion rates elevate, cause more waveguides swelling.

As a result of the process, a tapered waveguide is produced, with small MFD (Mode Field Diameter) and shallow depth at one side (low electric field side), and high MFD and deep waveguide at the other side (high electric field side).

Additional dummy wedged substrate - Linear

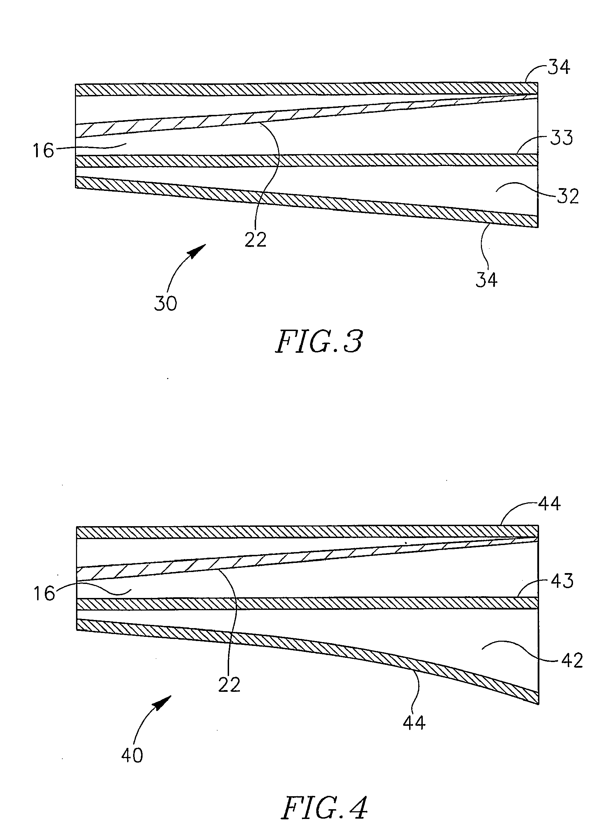

Reference is made now to Fig. 3, which is a schematic cross section description of tapering device 30 along a longitudinal axis of waveguide 22, functioning according to some embodiments of the present invention. In a way similar to that described with respect to Fig. 2, a wedge-like device 30 is constructed, yet here the gradually changing distance between the electrodes 34 is achieved by the attachment of a dummy wedge 32 next to face 33 of substrate 16. This brings to resulting electrical field similar to that described above with respect to Fig. 2.

Additional dummy Wedged glass substrate - Nonlinear

Reference is made now to Fig. 4 which is a schematic cross section description of tapering device 40 along a longitudinal axis of waveguide 22, functioning according to some embodiments of the present invention. In a way similar to that described with respect to Figs. 2 and 3, a wedge-like device 40 is constructed, yet here the gradually changing distance between the electrodes 44 is achieved by the attachment of a dummy wedge 42 next to face 43 of substrate 16. In the example depicted in Fig. 4 the distance between electrodes 44 changes non-linearly, and the electrical field between these electrodes changes accordingly. As a result, the tapering of waveguide 22 may be non-linear.

Additional dummy Wedged glass substrate - Complex linear or curved wedged glass

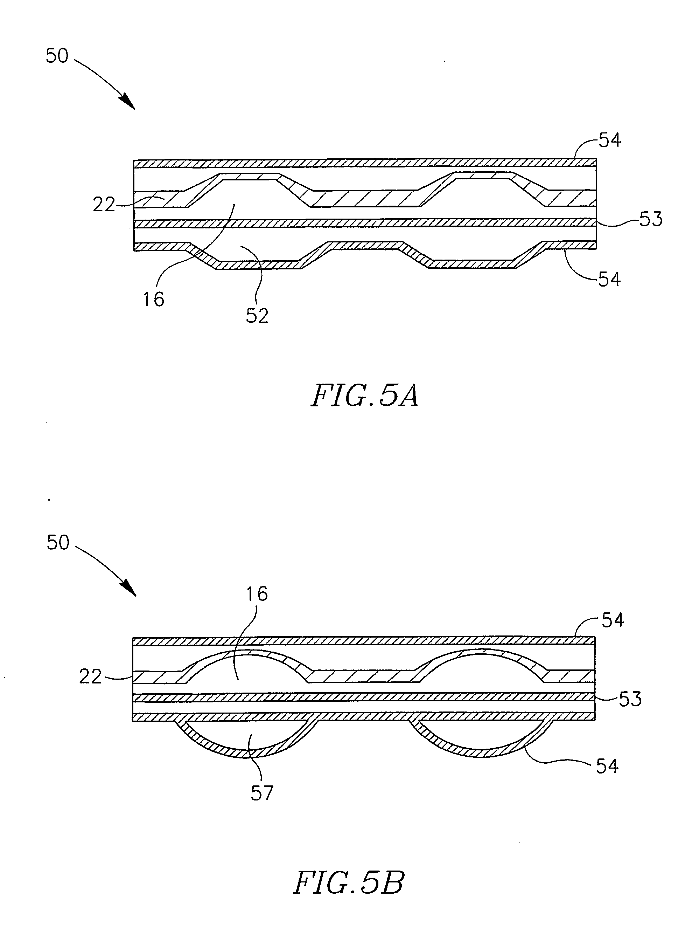

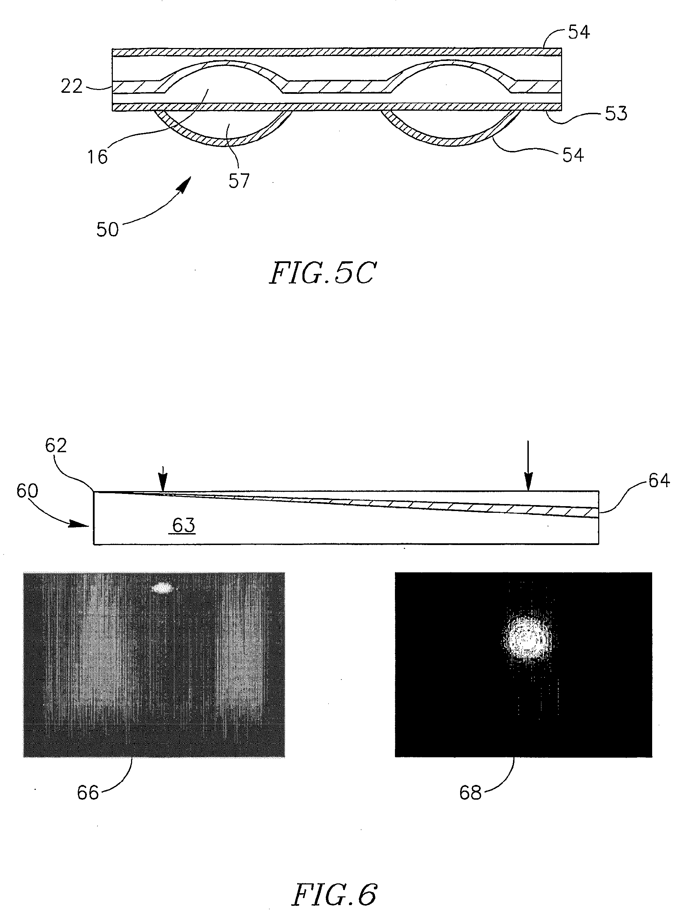

Reference is made now to Figs. 5A 5B and 5C, which are schematic cross section descriptions of tapering device 50 along a longitudinal axis of waveguide 22, functioning according to some embodiments of the present invention. In a way similar to that described with respect to Figs. 3 and 4, a device 50 is constructed, yet here the changing distance between the electrodes 54 is achieved by the attachment of a piece 52, 55, 57 respectively next to face 53 of substrate 16. Piece 52, 55, 57 may have complex linear or curved changing outer face. Accordingly, the distance between electrodes 54 complexly changes and thus may create a complexly tapered waveguide 22.

Reference is made now to Fig. 6, which is a schematic cross sectional description of a coupling waveguide that may be fabricated according to the some methods of the present invention described above, using the tapering process of the present invention. Waveguide 60 may have a first end 62 having a smaller, elliptical cross section and a second end 64 having a larger, substantially round cross section as depicted by views 66, 68 respectively. Waveguide 63 my be used, for example, as an adaptor, or an optical transformer, for connecting of, for example, a LASER diode to end 62 and an optical fiber to end 64. This arrangement enables simple, one-step production of conical taper for example, by unique control of stage two for example, with no additional production steps. This arrangement enables also the fabrication of an external mode size transformer that includes a waveguide having an input section, an output section, and a tapered section disposed between the input and output sections. The cross sections between the input and output sections of the waveguide can vary smoothly throughout the length of the waveguide. By positioning the external mode size transformer 60 between optical devices, coupling between optical devices is substantially improved compared to that of direct coupling. For example, by positioning the external mode size transformer between a laser and an optical fiber, laser to fiber coupling is significantly improved compared to that of direct coupling between these optical devices.

It would be apparent to a person skilled in the art that the methods and devices for manufacturing of waveguides described above are just examples. The same inventive solution may be used in many other ways, as long as electrical field is applied so as to form the required waveguide in a substrate.

## Claims

1. A method for shaping an optical waveguide (22) within a substrate (16), the method comprising:

   (a) depositing a layer of a masking material on a surface of the substrate (16);
   (b) performing a photo-lithographic process of etching said layer of masking material while leaving openings where the optical waveguide (22) is to be formed;
   (c) performing a first Ion Exchange process by contacting the masked surface of the substrate (16) with a first molten salt bath, to exchange sodium ions in the substrate (16) for a doping cation;
   wherein the performing of the first Ion Exchange process comprises creating an optical waveguide (22) which is within the substrate (16) and is adjacent to the surface of the substrate (16);
   (d) burying the optical waveguide (22) deeper within the substrate (16) by performing a second, different, Ion Exchange process comprising the steps of:

      (i) removing the layer of the masking material from the surface of the substrate (16);
      (ii) placing the substrate in an oven, and applying across the substrate (16) an electric field directed substantially perpendicularly to the substrate (16) surface;
      (iii) together with step (ii), contacting the active side of the substrate (16) with a second molten salt bath (14) which includes ions that contribute to the substrate (16) refractive index less than the first molten salt bath of step (c);

wherein the step of applying the electric field comprises: generating an ionic current, thereby (AA) causing the exchange ions from the first Ion Exchange process of step (c) to electro-migrate towards the depth of the substrate (16), and (BB) causing the optical waveguide (22) to drift towards the depth of the substrate (16); **characterized in that** the electric field applied in step (d)(ii) is a non-uniform electric field, and **in that** the magnitude of the non-uniform electrical field applied across the substrate (16) is controlled so as to: (I) modify the burying depth of the optical waveguide (22) along the substrate, and (II) create a gradient in the refractive index along the optical waveguide (22) buried within the substrate (16).

2. The method of claim 1, comprising:

    causing swelling of the optical waveguide within the substrate (16), by one or more operations which include at least:

        (A) increasing the heat of the oven in step (d) (iii) above; and
        (B) increasing the magnitude of the non-uniform electrical field applied across the substrate (16).

3. The method of any one of claims 1 to 2, wherein the step of applying across the substrate (16) a non-uniform electrical field directed substantially perpendicularly to the substrate (16) surface comprises:

    modifying the shape of the core of the optical waveguide (22), from an oval shape to a circular shape.

4. The method of any one of claim 1 to 3, wherein the step of applying across the substrate (16) a non-uniform electrical field directed substantially perpendicularly to the substrate (16) surface comprises:

    modifying the magnitude of the non-uniform electrical field to gradually attenuate along the optical waveguide (22).

5. The method of claim 4, wherein the step of modifying the magnitude of the non-uniform electrical field comprises:

    performing a linear modification of the magnitude of said non-uniform electrical field along the optical waveguide (22).

6. The method of claim 4, wherein the step of modifying the magnitude of the non-uniform electrical field comprises:

    performing a non-linear modification of the magnitude of said non-uniform electrical field along the optical waveguide (22).

7. The method of any one of claims 1 to 6, wherein the step of applying across the substrate (16) a non-uniform electrical field directed substantially perpendicularly to the substrate (16) surface comprises:

    forming the optical waveguide (22) as (A) a tapered shape having a continuously narrowing channel width, and (B) a channel having an index of refraction which varies to compensate for the change in channel geometry, and (C) a channel which maintains its modal properties uniform over the channel length.

8. The method of any one of claims 1 to 7, wherein the step of applying across the substrate (16) a non-uniform electrical field directed substantially perpendicularly to the substrate (16) surface comprises:

    forming the optical waveguide (22) as a channel which (A) has a greater index of refraction at regions where the applied non-uniform electrical field is smaller, and (B) has a smaller index of refraction at regions where the applied non-uniform electrical field is greater.

9. A system for shaping an optical waveguide (22) within a substrate (16), the system comprising:

    (a) means for depositing a layer of a masking material on a surface of the substrate (16);
    (b) means for performing a photo-lithographic process of etching said layer of masking material while leaving openings where the optical waveguide (22) is to be formed;
    (c) means for performing a first Ion Exchange process by contacting the masked surface of the substrate (16) with a first molten salt bath, to exchange sodium ions in the substrate (16) for a doping cation;
    wherein the performing of the first Ion Exchange process comprises creating an optical waveguide (22) which is within the substrate (16) and is adjacent to the surface of the substrate (16);
    (d) means for burying the optical waveguide (22) deeper within the substrate (16) by performing a second, different, Ion Exchange process, wherein the means for burying comprises:

        (i) means for removing the layer of the masking material from the surface of the substrate (16);

(ii) means for placing the substrate (16) in an oven, and means for applying across the substrate (16) an electric field directed substantially perpendicularly to the substrate (16) surface;

(iii) means for, together with step (ii), contacting the active side of the substrate (16) with a second molten salt bath (14) which includes ions that contribute to the substrate (16) refractive index less than the first molten salt bath of step (c);

wherein the step of applying the electric field comprises: generating an ionic current, thereby (AA) causing the exchange ions from the first Ion Exchange process of step (c) to electro-migrate towards the depth of the substrate (16), and (BB) causing the optical waveguide (22) to drift towards the depth of the substrate (16);

**characterized in that** the means for applying across the substrate (16) an electric field directed substantially perpendicularly to the substrate (16) surface is configured to apply a non-uniform electric field, and **in that** there is provided means for controlling the magnitude of the non-uniform electrical field applied across the substrate (16), thereby to: (I) modify the burying depth of the optical waveguide (22) along the substrate (16), and (II) create a gradient in the refractive index along the optical waveguide (22) buried within the substrate (16).

10. The system of claim 9, comprising:

means for causing swelling of the optical waveguide (22) within the substrate (16), by one or more operations which include at least:

(A) increasing the heat of the oven in step (d) (iii) above; and
(B) increasing the magnitude of the non-uniform electrical field applied across the substrate (16).

11. The system of any one of claims 9 to 10, wherein the means for applying across the substrate (16) a non-uniform electrical field directed substantially perpendicularly to the substrate (16) surface comprises:

two electrodes (24, 34, 44, 54) positioned within the second molten salt bath (14), wherein the two electrodes (24, 34, 44, 54) are angled to each other and are positioned at two opposite sides of the substrate (16);
means for modifying the magnitude of the non-uniform electrical field to gradually attenuate along the optical waveguide (22).

12. The system of claim 11, wherein the means for modifying the magnitude of the non-uniform electrical field comprises:

means for performing a linear modification of the magnitude of said non-uniform electrical field along the optical waveguide (22).

13. The system of claim 11, wherein the means for modifying the magnitude of the non-uniform electrical field comprises:

means for performing a non-linear modification of the magnitude of said non-uniform electrical field along the optical waveguide (22).

14. The system of any one of claims 9 to 13, wherein the means for applying across the substrate (16) a non-uniform electrical field directed substantially perpendicularly to the substrate (16) surface comprises:

means for forming the optical waveguide (22) as (A) a tapered shape having a continuously narrowing channel width, and (B) a channel having an index of refraction which varies to compensate for the change in channel geometry, and (C) a channel which maintains its modal properties uniform over the channel length.

15. The system of any one of claims 9 to 14, wherein the means for applying across the substrate (16) a non-uniform electrical field directed substantially perpendicularly to the substrate (16) surface comprises:

means for forming the optical waveguide (22) as a channel which (A) has a greater index of refraction at regions where the applied non-uniform electrical field is smaller, and (B) has a smaller index of refraction at regions where the applied non-uniform electrical field is greater.

**Patentansprüche**

1. Verfahren für die Formung eines Lichtwellenleiters (22) in einem Substrat (16), wobei das Verfahren Folgendes umfasst:

(a) Ablegen einer Schicht eines Maskiermaterials auf einer Oberfläche des Substrats (16);
(b) Durchführen eines fotolithografischen Abätzungsprozesses der Schicht aus Maskiermaterial, während Öffnungen gelassen werden, an welchen der Lichtwellenleiter (22) geformt wird;

(c) Durchführen eines ersten Ionenaustauschprozesses durch In-Kontakt-Bringen der maskierten Oberfläche des Substrates (16) mit einem ersten Salzschmelzenbad, um Natriumionen in dem Substrat (16) gegen ein dotiertes Kation auszutauschen;

wobei die Durchführung des ersten Ionenaustauschprozesses die Erzeugung eines Lichtwellenleiters (22) umfasst, der sich in dem Substrat (16) und benachbart zu der Oberfläche des Substrats (16) befindet;

(d) Tieferes Treiben des Lichtwellenleiters (22) in das Substrat (16) durch die Durchführung eines zweiten, unterschiedlichen Ionenaustauschprozesses, der die folgenden Schritte umfasst:

> (i) Entfernen der Schicht des Maskiermaterials von der Oberfläche des Substrats (16);
> (ii) Platzieren des Substrates in einem Ofen und Anlegen eines elektrischen Feldes an das Substrat (16), das im Wesentlichen senkrecht zu der Oberfläche des Substrates (16) gerichtet ist;
> (iii) gleichzeitig zu Schritt (ii), In-Kontakt-Bringen der aktiven Seite des Substrates (16) mit einem zweiten Salzschmelzenbad (14), welches Ionen umfasst, die weniger zu dem Brechungsindex des Substrates (16) beitragen als die des ersten Salzschmelzenbades aus Schritt (c); wobei der Schritt des Anlegens des elektrischen Feldes Folgendes umfasst: Erzeugen eines Ionenstroms,

wobei (AA) die ausgetauschten Ionen des ersten Ionenaustauschprozesses aus Schritt (c) durch Elektromigration tiefer in das Substrat (16) getrieben werden, und (BB) sich der Lichtwellenleiter (22) tiefer in das Substrat (16) verschiebt; **dadurch gekennzeichnet, dass** das in Schritt (d)(ii) angelegte elektrische Feld ein inhomogenes elektrisches Feld ist, und dadurch, dass die Stärke des inhomogenen elektrischen Feldes, das an das Substrat (16) angelegt wird, kontrolliert wird, um: (I) die Eintreibungstiefe des Lichtwellenleiters (22) in das Substrat zu modifizieren und (II) einen Anstieg des Brechungsindex entlang des Lichtwellenleiters (22), der in das Substrat (16) eingetrieben wurde, zu erzeugen.

2. Verfahren nach Anspruch 1, umfassend:

> Auslösen einer Anschwellung des Lichtwellenleiters in dem Substrat (16) durch einen oder mehrere Vorgänge, die zumindest Folgendes umfassen:

(A) Erhöhen der Temperatur des Ofens in Schritt (d)(iii) oben; und
(B) Erhöhen der Stärke des inhomogenen elektrischen Feldes, das an das Substrat (16) angelegt ist.

3. Verfahren nach einem der Ansprüche 1 bis 2, wobei der Schritt des Anlegens eines inhomogenen elektrischen Feldes, das im Wesentlichen senkrecht zu der Oberfläche des Substrates (16) gerichtet ist, an das Substrat (16) Folgendes umfasst:

> Verändern der Form des Kerns des Lichtwellenleiters (22) von einer ovalen Form hin zu einer kreisförmigen Form.

4. Verfahren nach einem der Ansprüche 1 bis 3, wobei der Schritt des Anlegens eines inhomogenen elektrischen Feldes, das im Wesentlichen senkrecht zu der Oberfläche des Substrates (16) gerichtet ist, an das Substrat (16) Folgendes umfasst:

> Verändern der Stärke des inhomogenen elektrischen Feldes, um entlang des Lichtwellenleiters (22) schrittweise abzunehmen.

5. Verfahren nach Anspruch 4, wobei der Schritt des Veränderns der Stärke des inhomogenen elektrischen Feldes Folgendes umfasst:

> Durchführen einer linearen Veränderung der Stärke des inhomogenen elektrischen Feldes entlang des Lichtwellenleiters (22).

6. Verfahren nach Anspruch 4, wobei der Schritt des Veränderns der Stärke des inhomogenen elektrischen Feldes Folgendes umfasst:

> Durchführen einer nichtlinearen Veränderung der Stärke des inhomogenen elektrischen Feldes entlang des Lichtwellenleiters (22).

7. Verfahren nach einem der Ansprüche 1 bis 6, wobei der Schritt des Anlegens eines inhomogenen elektrischen Feldes, das im Wesentlichen senkrecht zu der Oberfläche des Substrates (16) gerichtet ist, an das Substrat (16) Folgendes umfasst:

> Formen des Lichtwellenleiters (22) als (A) eine sich verjüngende Form mit einem sich kontinuierlich verengenden Kanaldurchmesser und (B) als ein Kanal mit einem variierenden Brechungsindex, um die Veränderung der Kanalgeometrie auszugleichen, und (C) ein Kanal mit konstanten modalen Eigenschaften über die gesamte Kanallänge.

8. Verfahren nach einem der Ansprüche 1 bis 7, wobei der Schritt des Anlegens eines inhomogenen elektrischen Feldes, das im Wesentlichen senkrecht zu der Oberfläche des Substrates (16) gerichtet ist, an das Substrat (16) Folgendes umfasst:

Formen des Lichtwellenleiters (22) als einen Kanal, der (A) an Stellen mit schwächerem inhomogenem elektrischem Feld einen höheren Brechungsindex aufweist und (B) an Stellen mit stärkerem inhomogenem elektrischem Feld einen niedrigeren Brechungsindex aufweist.

9. System für die Formung eines Lichtwellenleiters (22) in einem Substrat (16), wobei das System Folgendes umfasst:

(a) Vorrichtung für das Ablegen einer Schicht eines Maskiermaterials auf einer Oberfläche des Substrats (16);

(b) Vorrichtung für das Durchführen eines fotolithografischen Abätzungsprozesses der Schicht aus Maskiermaterial, während Öffnungen gelassen werden, an welchen der Lichtwellenleiter (22) geformt wird;

(c) Vorrichtung für das Durchführen eines ersten Ionenaustauschprozesses durch In-Kontakt-Bringen der maskierten Oberfläche des Substrates (16) mit einem ersten Salzschmelzenbad, um Natriumionen in dem Substrat (16) gegen ein dotiertes Kation auszutauschen; wobei die Durchführung des ersten Ionenaustauschprozesses die Erzeugung eines Lichtwellenleiters (22) umfasst, der sich in dem Substrat (16) und benachbart zu der Oberfläche des Substrats (16) befindet;

(d) Vorrichtung für das tiefere Treiben des Lichtwellenleiters (22) in das Substrat (16) durch die Durchführung eines zweiten, unterschiedlichen Ionenaustauschprozesses, wobei die Vorrichtung für das tiefere Treiben Folgendes umfasst:

(i) Vorrichtung für das Entfernen der Schicht des Maskiermaterials von der Oberfläche des Substrats (16);

(ii) Vorrichtung für das Platzieren des Substrates (16) in einem Ofen und Vorrichtung für das Anlegen eines elektrischen Feldes an das Substrat (16), das im Wesentlichen senkrecht zu der Oberfläche des Substrates (16) gerichtet ist;

(iii) gleichzeitig zu Schritt (ii), Vorrichtung für das In-Kontakt-Bringen der aktiven Seite des Substrates (16) mit einem zweiten Salzschmelzenbad (14), welches Ionen umfasst, die weniger zu dem Brechungsindex des Substrates (16) beitragen als die des ersten Salzschmelzenbades aus Schritt (c);

wobei der Schritt des Anlegens des elektrischen Feldes Folgendes umfasst: Erzeugen eines Ionenstroms, wobei (AA) die ausgetauschten Ionen des ersten Ionenaustauschprozesses aus Schritt (c) durch Elektromigration tiefer in das Substrat (16) getrieben werden, und (BB) sich der Lichtwellenleiter (22) tiefer in das Substrat (16) verschiebt; **dadurch gekennzeichnet, dass** die Vorrichtung für das Anlegen eines elektrischen Feldes, das im Wesentlichen senkrecht zu der Oberfläche des Substrates (16) gerichtet ist, an das Substrat (16) so eingestellt ist, um ein inhomogenes elektrisches Feld anzulegen, und **dadurch gekennzeichnet, dass** eine Vorrichtung für die Kontrolle der Stärke des inhomogenen elektrischen Feldes, das an das Substrat (16) angelegt worden ist, vorhanden ist, um: (I) die Eintreibungstiefe des Lichtwellenleiters (22) in das Substrat (16) zu modifizieren und (II) einen Anstieg des Brechungsindex entlang des Lichtwellenleiters (22), der in das Substrat (16) eingetrieben wurde, zu erzeugen.

10. System nach Anspruch 9, das Folgendes umfasst::

Vorrichtung für das Auslösen einer Anschwellung des Lichtwellenleiters (22) in dem Substrat (16) durch einen oder mehrere Vorgänge, die zumindest Folgendes umfassen:

(A) Erhöhen der Temperatur des Ofens in Schritt (d)(iii) oben; und
(B) Erhöhen der Stärke des inhomogenen elektrischen Feldes, das an das Substrat (16) angelegt ist.

11. System nach einem der Ansprüche 9 bis 10, wobei die Vorrichtung für das Anlegen eines inhomogenen elektrischen Feldes, das im Wesentlichen senkrecht zu der Oberfläche des Substrates (16) gerichtet ist, an das Substrat (16) Folgendes umfasst:

zwei Elektroden (24, 34, 44, 54), die in dem zweiten Salzschmelzenbad (14) angeordnet sind, wobei die beiden Elektroden (24, 34, 44, 54) angewinkelt zueinander und an zwei gegenüberliegenden Seiten des Substrates (16) angeordnet sind;
Vorrichtung für das Verändern der Stärke des inhomogenen elektrischen Feldes, um entlang des Lichtwellenleiters (22) schrittweise abzunehmen.

12. System nach Anspruch 11, wobei die Vorrichtung für das Verändern der Stärke des inhomogenen elektrischen Feldes Folgendes umfasst:

Vorrichtung für das Durchführen einer linearen Veränderung der Stärke des inhomogenen elektrischen Feldes entlang des Lichtwellenleiters (22).

13. System nach Anspruch 11, wobei die Vorrichtung für das Verändern der Stärke des inhomogenen elektrischen Feldes Folgendes umfasst:

Vorrichtung für das Durchführen einer nichtlinearen Veränderung der Stärke des inhomogenen elektrischen Feldes entlang des Lichtwellenleiters (22).

14. System nach einem der Ansprüche 9 bis 13, wobei die Vorrichtung für das Anlegen eines inhomogenen elektrischen Feldes, das im Wesentlichen senkrecht zu der Oberfläche des Substrates (16) gerichtet ist, an das Substrat (16) Folgendes umfasst:

Vorrichtung für das Formen des Lichtwellenleiters (22) als (A) eine sich verjüngende Form mit einem sich kontinuierlich verengenden Kanaldurchmesser und (B) als ein Kanal mit einem variierenden Brechungsindex, um die Veränderung der Kanalgeometrie auszugleichen, und (C) ein Kanal mit konstanten modalen Eigenschaften über die gesamte Kanallänge.

15. System nach einem der Ansprüche 9 bis 14, wobei die Vorrichtung für das Anlegen eines inhomogenen elektrischen Feldes, das im Wesentlichen senkrecht zu der Oberfläche des Substrates (16) gerichtet ist, an das Substrat (16) Folgendes umfasst:

Vorrichtung für das Formen des Lichtwellenleiters (22) als einen Kanal, der (A) an Stellen mit schwächerem inhomogenem elektrischem Feld einen höheren Brechungsindex aufweist und (B) an Stellen mit stärkerem inhomogenem elektrischem Feld einen niedrigeren Brechungsindex aufweist.

**Revendications**

1. Une méthode de modelage d'un guide d'ondes lumineuses (22) dans un substrat (16), cette méthode comprenant :

(a) le dépôt d'une couche d'une matière de masquage sur une surface du substrat (16) ;
(b) l'exécution d'un procédé photo-lithographique d'attaque de ladite matière de masquage tout en laissant des ouvertures où l'on formera le guide d'ondes lumineuses (22) ;
(c) l'exécution d'un premier procédé d'échange ionique par le contact de la surface masquée du substrat (16) avec un premier bain de sels fondus, pour échanger des ions de sodium dans le substrat (16) contre un cation de dopage ;
l'exécution du premier procédé d'échange ionique comprenant la création d'un guide d'ondes lumineuses (22) situé au sein du substrat (16) et adjacent à la surface du substrat (16) ;
(d) l'enfoncement du guide d'ondes lumineuses (22) à une profondeur majeure dans le substrat (16), en effectuant un deuxième procédé d'échange ionique différent, comprenant les étapes suivantes :

(i) enlèvement de la couche de matière de masquage de la surface du substrat (16) ;
(ii) placement du substrat dans un four, et application dans le substrat (16) d'un champ électrique orienté dans une direction substantiellement perpendiculaire à la surface du substrat (16) ;
(iii) conjointement avec l'étape (ii), contact avec le côté actif du substrat (16) avec un deuxième bain de sels fondus (14) comprenant des ions qui contribuent à l'indice de réfraction du substrat (16) inférieur au premier bain de sens fondus de l'étape (c) ;

l'étape d'application du champ électrique comprenant : la production d'un courant ionique, (AA) causant l'électro-migration des ions d'échange du premier procédé d'échange ionique du point (c) vers la profondeur du substrat (16), et (BB) en entraînant le déplacement du guide d'ondes lumineuses (22) vers la profondeur du substrat (16) ; **caractérisée en ce que** le champ électrique appliqué au point (d)(ii) est un champ électrique non uniforme, et la magnitude du champ électrique non uniforme appliqué sur le substrat (16) est réglée de façon (I) à modifier la profondeur d'enfoncement du guide d'ondes lumineuses (22) le long du substrat, et (II) à créer un gradient dans l'indice de réfraction le long du guide d'ondes lumineuses (22) enfoncé dans le substrat (16).

2. La méthode selon la revendication 1, comprenant :

le gonflage du guide d'ondes lumineuses occasionné au sein du substrat (16) par une ou plusieurs interventions, y compris, au moins :

(A) l'augmentation de la chaleur du four au point (d)(iii) ci-dessus ; et
(B) l'augmentation de la magnitude du champ électrique non uniforme appliqué dans le substrat (16).

3. La méthode selon une quelconque des revendications 1 à 2, l'étape d'application dans le substrat (16) d'un champ électrique non uniforme, orienté dans une direction substantiellement perpendiculaire à la surface du substrat (16), comprenant :

la modification de la forme du coeur du guide d'ondes lumineuses (22) d'une forme ovale à une forme circulaire.

4. La méthode selon une quelconque des revendications 1 à 3, l'étape d'application dans le substrat (16) d'un champ électrique non uniforme, orienté dans une direction substantiellement perpendiculaire à la surface du substrat (16), comprenant :

la modification de la magnitude du champ électrique non uniforme pour donner lieu à une atténuation progressive le long de la forme d'onde (22).

5. La méthode selon la revendication 4, l'étape de modification de la magnitude du champ électrique non uniforme comprend :

l'exécution d'une modification linéaire de la magnitude dudit champ électrique non uniforme le long du guide d'ondes lumineuses (22).

6. La méthode selon la revendication 4, l'étape de modification de la magnitude du champ électrique non uniforme comprenant :

l'exécution d'une modification non linéaire de la magnitude dudit champ électrique non uniforme le long du guide d'ondes lumineuses (22).

7. La méthode selon une quelconque des revendications 1 à 6, l'étape d'application dans le substrat (16) d'un champ électrique non uniforme dirigé de façon substantiellement perpendiculaire à la surface du substrat (16), comprenant :

la formation du guide d'ondes lumineuses (22) comme (A) une forme conique présentant une largeur de canal se rétrécissant en continu, (B) un canal présentant un indice de réfraction variant pour compenser les variations de la géométrie du canal, et (C) un canal qui maintient l'uniformité de ses propriétés modales sur la longueur du canal.

8. La méthode selon une quelconque des revendications 1 à 7, l'étape d'application dans le substrat (16) d'un champ électrique non uniforme dirigé de façon substantiellement perpendiculaire à la surface du substrat (16), comprenant :

la formation du guide d'ondes lumineuses (22) comme un canal (A) présentant un indice de réfraction plus élevé dans des zones où le champ électrique non uniforme appliqué est plus petit, et (B) présentant un indice de réfraction plus petit dans des zones où le champ électrique non uniforme appliqué est plus élevé.

9. Un système de modelage d'un guide d'ondes lumineuses (22) dans un substrat (16), le système comprenant :

(a) un dispositif pour le dépôt d'une couche d'une matière de masquage sur une surface du substrat (16) ;
(b) un dispositif pour l'exécution d'un procédé photo-lithographique d'attaque de ladite matière de masquage, tout en laissant des ouvertures où le doit former le guide d'ondes lumineuses (22) ;
(c) un dispositif pour l'exécution d'un premier procédé d'échange ionique par le contact de la surface masquée du substrat (16) avec un premier bain de sels fondus, pour échanger des ions de sodium dans le substrat (16) contre un cation de dopage ;
l'exécution du premier procédé d'échange ionique comprenant la création d'un guide d'ondes lumineuses (22) situé au sein du substrat (16) et adjacent à la surface du substrat (16) ;
(d) un dispositif pour l'enfoncement du guide d'ondes lumineuses (22) à une profondeur majeure dans le substrat (16), en effectuant un deuxième procédé d'échange ionique différent, le dispositif d'enfoncement comprenant :

(i) un dispositif pour l'enlèvement de la couche de matière de masquage de la surface du substrat (16) ;
(ii) un dispositif pour le placement du substrat (16) dans un four, et un dispositif pour l'application dans le substrat (16) d'un champ électrique orienté dans une direction substantiellement perpendiculaire à la surface du substrat (16) ;
(iii) un dispositif pour assurer, conjointement avec l'étape (ii), le contact avec le côté actif du substrat (16) avec un deuxième bain de sels fondus (14) comprenant des ions qui contribuent à l'indice de réfraction du substrat (16) inférieur au premier bain de sens fondus de l'étape (c) ;

l'étape d'application du champ électrique comprenant : la production d'un courant ionique, (AA) causant ainsi l'électro-migration des ions d'échange du premier procédé d'échange ionique du point (c) vers la profondeur du substrat (16), et (BB) en entraînant le déplacement du guide d'ondes lumineuses (22) vers la profondeur du substrat (16) ; **caractérisée en ce que** le dispositif pour l'application sur le substrat (16) d'un champ électrique dirigé de façon substantiellement perpendiculaire à la surface du substrat (16) est configuré pour appliquer un champ électrique non uniforme, et **en ce qu'**un dispositif permet de contrôler la magnitude du champ électrique non uniforme sur le substrat (16) de façon (I) à modifier la profondeur d'enfoncement du guide d'ondes lumineuses (22) le long du substrat (16), et (II) à créer un gradient dans l'indice de réfraction le long du guide d'ondes lumineuses (22) enfoncé dans le substrat (16).

10. Le système selon la revendication 9, comprenant :

un dispositif pour effectuer le gonflement du guide d'ondes lumineuses (22) au sein du substrat (16) par une ou plusieurs interventions, comprenant au moins :

(A) l'augmentation de la chaleur du four au point (d)(iii) ci-dessus ; et
(B) l'augmentation de la magnitude du champ électrique non uniforme appliqué dans le substrat (16).

11. Le système selon une quelconque des revendications 9 à 10, le dispositif permettant d'appliquer sur le substrat (16) un champ électrique non uniforme dirigé de façon substantiellement perpendiculaire à la surface du substrat (16) comprenant :

deux électrodes (24, 34, 44, 54) positionnées dans le bain de sels fondus (14), les deux électrodes (24, 34, 44, 54) étant inclinées l'une par apport à l'autre, et positionnées de deux côté opposés du substrat (16) ;
un dispositif pour modifier la magnitude du champ électrique non uniforme, pour son atténuation progressive le long du guide d'ondes lumineuses (22).

12. Le système selon la revendication 11, le dispositif de modification de la magnitude du champ électrique non uniforme comprenant :

un dispositif pour l'exécution d'une modification linéaire de la magnitude du champ électrique non uniforme le long du guide d'ondes lumineuses (22).

13. Le système selon la revendication 11, le dispositif de modification de la magnitude du champ électrique non uniforme comprenant :

un dispositif pour l'exécution d'une modification non linéaire de la magnitude du champ électrique non uniforme le long du guide d'ondes lumineuses (22).

14. Le système selon une quelconque des revendications 9 à 13, le dispositif permettant d'appliquer sur le substrat (16) un champ électrique non uniforme dirigé de façon substantiellement perpendiculaire à la surface du substrat (16) comprenant :

un dispositif pour la formation du guide d'ondes lumineuses (22) comme (A) une forme conique présentant une largeur de canal se rétrécissant en continu, (B) un canal présentant un indice de réfraction variant pour compenser les variations de la géométrie du canal, et (C) un canal maintenant l'uniformité de ses propriétés modales sur la longueur du canal.

15. Le système selon une quelconque des revendications 9 à 14, le dispositif permettant d'appliquer sur le substrat (16) un champ électrique non uniforme dirigé de façon substantiellement perpendiculaire à la surface du substrat (16) comprenant :

un dispositif pour la formation du guide d'ondes lumineuses (22) comme un canal (A) présentant un indice de réfraction dans des zones où le champ électrique non uniforme appliqué est plus petit, et (B) présentant un indice de réfraction plus petit dans des zones où le champ électrique non uniforme appliqué est plus grand.

*FIG.1*

*FIG.2*

FIG.3

FIG.4

*FIG.5A*

*FIG.5B*

*FIG.5C*

*FIG.6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4913717 A
- US 5035734 A
- US 5160360 A
- US 4886538 A
- US 6751391 B
- US 6769274 B
- US 4711514 A
- US 3836348 A
- JP 58118610 A
- JP 60145935 A

**Non-patent literature cited in the description**

- **T. POSZNER ; G. SCHREITER ; R. MULLER.** *J. Appl. Phys,* 1991, 1966-1674
- **B. PANTCHEV ; P. DANESH ; Z. NILCOLOV.** *Appl. Phys. Lett,* 1993, 1212-1214
- **B. BUCHOLD ; C. GLINGENER ; D. CULEMANN ; E. VOGES.** *Fiber and integrated optics,* 1998, 279-298
- **RAMASWAMY et al.** *J. of Lightwave Technology,* June 1998, vol. 6 (6), 984-1002